# EUROPEAN PATENT SPECIFICATION

(11) **EP 4 426 498 B1**
(45) Date of publication and mention of the grant of the patent: **25.06.2025**
(21) Application number: 22793771.1
(22) Date of filing: 01.11.2022
(51) Int. Cl.: B04C 3/06, B04C 9/00, B01D 21/26

(54) **AN APPARATUS FOR REMOVING PARTICULATE MATERIALS FROM A LIQUID STREAM**
VORRICHTUNG ZUM ENTFERNEN VON TEILCHEN AUS EINEM FLÜSSIGKEITSSTROM
APPAREIL POUR ÉLIMINER DES MATIÈRES PARTICULAIRES D'UN FLUX DE LIQUIDE

(30) Priority: 02.11.2021 GB 202115737; 25.05.2022 GB 202207689
(43) Date of publication of application: 11.09.2024
(73) Proprietor: GM Innovations Limited, Glasgow G2 2BA (GB)
(72) Inventor: MELLING, Gerard, Glasgow G2 2BA (GB)
(74) Representative: Schlich
(86) International application number: PCT/EP2022/080459
(87) International publication number: WO 2023/078874

(56) References cited:
- WO-A2-2018/154115
- US-A1- 2003 006 188

## Description

This invention relates to an apparatus for removing particulate materials from a liquid stream.

### Background of the Invention

There is a need for an apparatus for removing particulate materials from a liquid such as water that is robust, of simple construction, has a high throughput, and is readily portable. Such an apparatus is particularly desirable for producing potable water in areas where water treatment facilities are otherwise not available or are difficult to access.

WO 2018/154115 (GM Innovations Limited) discloses an apparatus for removing impurities from a fluid stream. The apparatus makes use of centrifugal separation for separating suspended materials from a fluid. The document also describes a vortex-separator device which can cause separation of components within a fluid stream by generating a vortex in a fixed tubular separator unit. This apparatus can be used in a continuous process for separating components within a fluid stream into two separate fluid streams.

While WO 2018/154115 describes the use of the apparatus to separate solids from liquids (e.g. sand from water), it does not describe the separation of two solids from each other. In addition, although the apparatus in WO 2018/154115 is suitable for separating two components of a fluid stream from each other, this apparatus is not described as being suitable for separating a fluid stream into three or more components.

### Summary of the Invention

The present invention relates to an improved apparatus for removing particulate materials from a liquid stream and in particular water. The apparatus of the invention has a minimal number of moving parts and therefore has a maintenance burden which is significantly reduced compared to many known apparatuses. This makes it of particular usefulness in more remote locations where maintenance facilities and expertise may be in short supply. The apparatus of the invention makes use of a centrifugal separation mode of action in which a centrifugal force is created in a separating chamber by directing liquid flow through angled channels at an upstream end of the chamber onto the vanes of a spinner which spins to create a vortex. Particulate-free liquid or liquid containing only low density particles passes along the separating chamber and exits through a central outlet whereas denser particulates are thrown to the radially outer regions of the chamber and pass along the separating chamber to a different (second) outlet which surrounds the central first outlet.

Accordingly, in a first aspect of the invention, there is provided an apparatus for removing solids from a liquid stream, the apparatus comprising:
a separating chamber having a liquid inlet at an upstream end thereof, a central first outlet at a downstream end of the chamber and a second outlet disposed radially outwardly of the central first outlet;
the liquid inlet being in communication with a source of pressurised liquid and comprising at least one angled channel passing through a nozzle block and opening out into the separating chamber;
a spinner rotatably mounted inside the separating chamber and having a plurality of vanes;
the separating chamber and spinner being arranged such that, in use, pressurised liquid passing through the angled channels of the liquid inlet is incident upon the vanes of the spinner so as to rotate the spinner and thereby swirl liquid entering the separating chamber to form a vortex, the pressurised liquid being the sole means of rotating the spinner, the vortex bringing about centrifugal separation of components of the liquid as it passes from the upstream end of the chamber to the downstream end of the chamber, the denser components of the liquid stream being directed out of the chamber through the second outlet and lighter components of the liquid stream being directed out of the chamber through the central first outlet.

In the apparatus of the invention, a centrifugal separating effect is created within the separating chamber by the rotation of the spinner. The rotation of the spinner is driven by the flow of water from the angled channels of the liquid inlet on to the vanes of the spinner. No other power source is required for the rotation of the spinner.

The spinner typically has a shaft which is mounted in a bearing in the nozzle block. The number of vanes present on the spinner may vary, for example from three to eight. More usually, the number of vanes will be in the range from three to six, for example four, five or six.

The vanes may be angled at an angle of from 1° to 90°, more usually from 10° to 60°, for example from 15° to 50°, such as approximately 22.5° or approximately 45°, with respect to the longitudinal direction of the separating chamber. The angles of the vanes may increase from the root (inner region of the vane) to the outer edge of the vane. Thus, the vanes may have a twisted form, with the angle of twist increasing towards the outer edges of the vanes.

The nozzle block typically has a plurality of angled channels passing therethrough. For example, there may be between two and ten angled channels. More usually, there will be between three and eight angled channels, e.g. three, four, five, six and seven angled channels.

The angles of the angled channels can vary but typically are in a range from about 20° to about 45 ° relative to a central axis of the separating chamber. The angled channels are typically oriented to direct liquid onto the vanes in a tangential direction relative to the vanes.

The channels may have a constant cross section along their length, or they may taper in a downstream direction.

In one embodiment, the channels are of constant cross section.

In another embodiment, the channels taper in a downstream direction.

The channels are typically circular in cross section.

The width (e.g. diameter) of the channels and the number of channels will depend on the volumes and pressures of liquid that the apparatus is intended to accommodate and hence may vary within wide ranges.

It has been found that when the number of angled channels is the same as the number of vanes on the spinner, an undesirable pulsing effect results. Preferably, therefore, the number of vanes on the spinner is different from the number of angled channels. More preferably, the number of vanes on the spinner differs from the number of angled channels by an odd number, e.g. one.

Particular examples of combinations of numbers of vanes and angled channels include:
- 3 channels and 4 vanes;
- 4 channels and 5 vanes; and
- 5 channels and 6 vanes.

The angled channels and the vanes of the spinner can be configured so that they impart either a clockwise swirl to the liquid, or an anti-clockwise swirl.

In one embodiment, the angled channels and the vanes of the spinner are configured so that they impart a clockwise swirl to the liquid.

In another embodiment, the angled channels and the vanes of the spinner are configured so that they impart an anti-clockwise swirl to the liquid.

Prior to the liquid stream passing through the angled channels, the liquid stream may be channelled to reduce turbulence. Reduced turbulence in the liquid stream entering the nozzle block results in a greater separation efficiency.

The apparatus may therefore comprise an inlet flow chamber containing a plurality of walls that define a plurality of channels for channelling the liquid stream. The channels may be parallel or may converge towards the downstream end of the apparatus. For example, the channels may converge together at an angle of up to 20° or up to 10°.

The apparatus may comprise six or more, seven or more or eight or more walls that define the channels. In one embodiment, the apparatus comprises eight walls that define the channels. The walls that define the channels may be formed from a metal or plastics material, which is sufficiently rigid so as not to deform as the fluid stream passes through the device.

The walls are typically longitudinally extending in the direction of the liquid stream through the inlet flow chamber. The walls may also extend towards the centre of the inlet flow chamber (but not necessarily extend radially towards the centre of the inlet flow chamber).

In one embodiment, a channel may be an open-sided channel and may be formed from a base portion and a pair of side walls extending therefrom to form an open-sided channel. In a further embodiment, a channel may be a closed channel and may comprise a base portion and a pair of side walls extending therefrom, the side walls being linked together to form a single continuous wall which defines a closed channel. The walls may be straight, curved or bent. When the walls define an open-sided channel, the walls may converge (either converging at the same extent or to different extents). The open side of the channel typically faces towards the centre of the inlet flow chamber.

The walls or bases are typically fixed to an interior wall of an inlet to the separation unit. Typically, the fixings used to fix the walls/bases to the interior wall of the inlet to the separation unit are chosen to minimise turbulence as the fluid stream passes over the fixings (e.g. use of countersunk screws or rivets). Alternatively, the walls may be integrally formed with the inlet flow chamber.

For example, in one embodiment, the apparatus may comprise an inlet flow chamber containing three, four or five (e.g. four) open-sided channels, each channel being defined by a base portion and a pair of (typically convergent) side walls extending from the base portion, wherein the open-sided channels face towards the centre of the inlet flow chamber and the base portions are each fixed to an interior wall of the inlet flow chamber.

In another embodiment, the apparatus may comprise an inlet flow chamber containing three, four or five (e.g. four) open-sided channels, each channel being defined by a base portion and a pair of (typically convergent) side walls extending from the base portion, wherein the open-sided channels face towards the centre of the inlet flow chamber and the base portions are each integrally formed with, or form part of, an interior wall of the inlet flow chamber.

The guide walls are typically located upstream of the vortex-creating device and impeller (if present).

The second outlet may be a single outlet of annular shape surrounding the central first outlet. Alternatively, the second outlet may be constituted by a plurality of outlets arranged circumferentially about the central first outlet. Where there is a plurality of second outlets, they will typically be linked to a common collector.

A funnel may be provided for channelling the denser components and directing them to the first or second outlet. In one embodiment, the downstream end of the separating chamber may be funnel-shaped. In another embodiment, a funnel-shaped insert may be provided inside the separating chamber. Thus, for example, the funnel-shaped insert may be held within the separating chamber by means of a friction fit, or by adhesive, or one or more mechanical fastening elements or, where the funnel-shaped insert and the separating chamber wall are made of a weldable material, by means of welding.

The central first outlet may, in its simplest form, comprise a pipe end extending into the separating chamber. However, in order to smooth the flow of liquid in the downstream end of the separating chamber, the first outlet may have an at least partially divergent (in a downstream direction) radially outer surface so that liquid containing denser components is deflected outwardly and away from the first outlet. The divergent outer surface may be inclined or curved so as to deflect the denser components in a radially outwards direction. When the outer surface is curved, it may be convexly or concavely curved (when viewed from an angle perpendicular with respect to a main axis of the separator chamber).

In one embodiment, the central first outlet may have a substantially conical shape (increasing in diameter in a downstream direction), or a modified conical shape wherein the side wall of the cone is concavely or convexly curved.

Thus, the central first outlet may comprise a substantially conical formation or a modified conical formation wherein the side wall of the cone is concavely or convexly curved, and wherein the substantially conical formation or modified conical formation has an opening at the centre thereof which serves as the central first outlet. In this embodiment, the substantially conical or modified conical formation may comprise an integrally formed (e.g. by machining or casting) element, or it may comprise an inner pipe member about which is secured a conical or modified conical sleeve. The conical or modified conical sleeve may be formed from, for example, a suitable metal or plastics material.

The substantially conical or modified conical formation may be surrounded by an annular substantially axially facing surface in which are provided a plurality of openings which are typically linked to a common collector and therefore together constitute a second outlet.

Each of the plurality of openings may be located in a floor of a recess in the axially facing surface. A recess may have an inclined surface leading to a said opening. Thus, for example, the recess may deepen progressively in an annular direction toward the said opening.

The orientation of the inclined surface and associated opening will typically depend on whether the angled channels and the vanes of the spinner are configured so that they impart a clockwise swirl to the liquid, or an anti-clockwise swirl.

In one embodiment, the angled channels and the vanes of the spinner are configured so that they impart a clockwise swirl to the liquid, and each opening forming part of the second outlet is at a clockwise end of its associated recess.

In another embodiment, the angled channels and the vanes of the spinner are configured so that they impart an anti-clockwise swirl to the liquid, and each opening forming part of the second outlet is at an anti-clockwise end of its associated recess.

In another embodiment, a tube or pipe is held within the outlet at the downstream end of the separating chamber such that there is an annular space between the tube or pipe and the wall of the outlet. In this embodiment, the tube or pipe constitutes the central first (or inner) liquid outlet and the annular space constitutes the second (or outer) liquid outlet.

The apparatus of the invention is particularly useful for removing solids from a liquid stream where the liquid stream is water. Thus, for example, it may be used for the purification of water intended for drinking. The apparatus may be used to remove all or a part of any solid contaminants in water and water collected from the outlet may be directed to apparatus for further processing of the water to give water of a potable standard. The further processing of the water may involve one or further filtration steps to remove fine particulates, for example by reverse osmosis filtration. Alternatively, or additionally, the water may be passed through an activated carbon filter for removing organic substances such as solvent residues, and may additionally be sterilised by UV irradiation.

According to the invention, the spinner is driven solely by water flow through the channels in the nozzle block. No other power source is required for driving the spinner. The flow of pressurised water is typically provided by a pump which may be of various types. The flow of water through the apparatus may be regulated by controlling the pump output.

A pre-filter may be provided upstream or downstream (typically upstream) of the pump to filter out any large solid materials so to avoid clogging up the pump and/or the channels in the nozzle block.

The separating chamber is typically tubular in construction and circular in cross-section. However, the interior of the separating chamber may be divergent at an inlet end and convergent at an outlet end (e.g. funnel-shaped at its ends). The term "funnel-shaped" as used herein may cover shapes with an increasing/decreasing cross-sectional diameter which increases/decreases at a constant rate. Additionally, the term "funnel-shaped" covers shapes with a cross-sectional diameter which increases/decreases at either an increasing rate or a decreasing rate.

Accordingly, the interior of the separating chamber may comprise three sections:
(i) a first section of increasing diameter (preferably increasing at a constant rate);
(ii) a second section of a constant diameter; and
(iii) a third section of a decreasing diameter (preferably decreasing at a constant rate).

It will be appreciated that the reference to "increasing diameter" in (i) refers to an increasing diameter in a downstream direction, i.e. away from the liquid inlet, whereas the reference to "decreasing diameter" in (iii) refers to a decreasing diameter in a downstream direction.

The divergent and/or convergent (e.g. funnel-shaped) ends may be integrally formed as part of the separating chamber or may be formed by affixing angled or appropriately straight or curved guide walls to the interior of the separator.

As noted above, the separating chamber is typically tubular in shape and therefore generally has a longitudinal axis. The separating chamber may be mounted so that its longitudinal axis is substantially vertical, or substantially horizontal, or at an angle between vertical and horizontal. When the separating chamber is mounted so that its longitudinal axis is substantially vertical, it may be referred to herein as a vertically mounted separating chamber. Analogously, when the separating chamber is mounted so that its longitudinal axis is substantially horizontal, it may be referred to herein as a horizontally mounted separating chamber.

When the separating chamber is tubular in shape and vertically mounted, the separating chamber is mounted such that gravity acts in a direction substantially parallel to the longitudinal axis of the tubular separating chamber. By contrast, when horizontally mounted, gravity acts in a direction substantially orthogonal to the longitudinal axis of the separating chamber. When horizontally mounted, heavy particles may collect along one side of the separating chamber (i.e. the bottom side) as a result of gravity and therefore there may an uneven distribution of material across the cross-section of the separating chamber. Therefore, in some instances, a vertically mounted separating chamber is preferred, as gravity does not cause material to collect along one side of the separating chamber to a greater extent than the other.

When vertically mounted, the liquid inlet may be either at the top or the bottom of the apparatus.

Accordingly, in one general embodiment of the invention, the separating chamber is mounted so that its longitudinal axis is substantially horizontal.

In another general embodiment of the invention, the separating chamber is mounted so that its longitudinal axis is substantially vertical, and the liquid inlet is located at the top of the apparatus.

In a further general embodiment of the invention, the separating chamber is mounted so that its longitudinal axis is substantially vertical, and the liquid inlet is located at the bottom of the apparatus.

The output from the central first outlet, which will be liquid (e.g. water) from which a large proportion (or substantially all) of any solid matter originally present has been removed. The first outlet can be connected to a collector for collecting the purified or partially purified water, or can be connected to a downstream apparatus for further purification of the liquid.

The output from the second outlet(s) can be directed to waste or can be recycled back to the liquid inlet and passed through the apparatus one or more further times for further extraction of purified liquid.

In situations where the solids suspended in the liquid are of interest (e.g., gold particles, or other metals of interest), the apparatus of the invention can be used to concentrate particulate materials suspended in the liquid (e.g. water) by repeatedly recycling the output from the second outlet(s) through the apparatus until a desired degree of concentration has been achieved.

The volumes of liquid collected from the first and second outlets can be controlled by varying the pumping pressure of liquid into the apparatus but can additionally be controlled by the use of restriction or flow control valves (throttle valves) located in-line with the first and/or second outlets and downstream thereof. Thus, in one embodiment, the central first outlet is linked to a collector (e.g. a pipe or tube) which is provided with a flow controller for controlling the flow of liquid from the first outlet; and/or the second outlet(s) is connected to a collector (e.g. a pipe or tube) which is provided with a flow controller for controlling the flow of liquid from the second outlet(s).

In another aspect, the invention provides an apparatus as hereinbefore defined which also comprises a pump for supplying the liquid under pressure to the apparatus and optionally a tank from which the liquid is pumped. The apparatus may further comprise a pre-filter or coarse filter for removing larger particulates from the liquid before it enters the apparatus.

As an alternative to pumping the liquid from a tank to the apparatus, it may be pumped directly from a source such as a river, lake or well.

In a further aspect, the invention provides a method of removing particulate materials from a liquid such as water, which method comprises pressurising the liquid and directing it through an apparatus of the invention.

In a still further aspect, the invention provides a method of removing particulate materials from a liquid such as water, which method comprises pumping the liquid through an apparatus of the invention.

The invention will now be illustrated in more detail (but not limited) by reference to the specific embodiments shown in the accompanying drawings.

### Brief Description of the Drawings

Figure 1 is a schematic side view showing an apparatus according to one embodiment of the invention.
Figure 2 is a cross-sectional schematic view of the apparatus shown in Figure 1.
Figure 3 is a cross-sectional schematic view of an apparatus according to a second embodiment of the invention.
Figures 4 and 5 are cross-sectional schematic views of variations in the configurations of the downstream end of the separator tube for the apparatuses shown in Figures 1 to 3.
Figure 6 is a photograph from one side of an apparatus according to the invention.
Figures 7A and 7B show possible configurations of guide channels within the T-connectors for channelling suspension through to the separating chamber.
Figure 8 is an enlarged side view of the downstream mounting block of the embodiment shown in Figure 6.
Figure 9 is a view from direction D of the downstream mounting block of Figure 8.
Figure 10 is a perspective view of the downstream mounting block of Figures 8 and 9.

### Detailed Description of the Invention

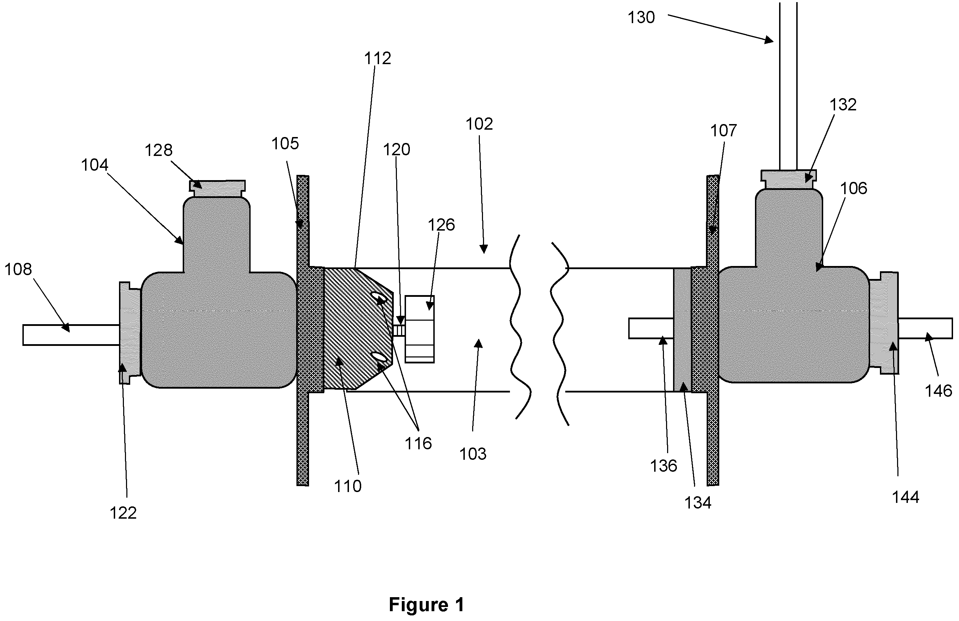

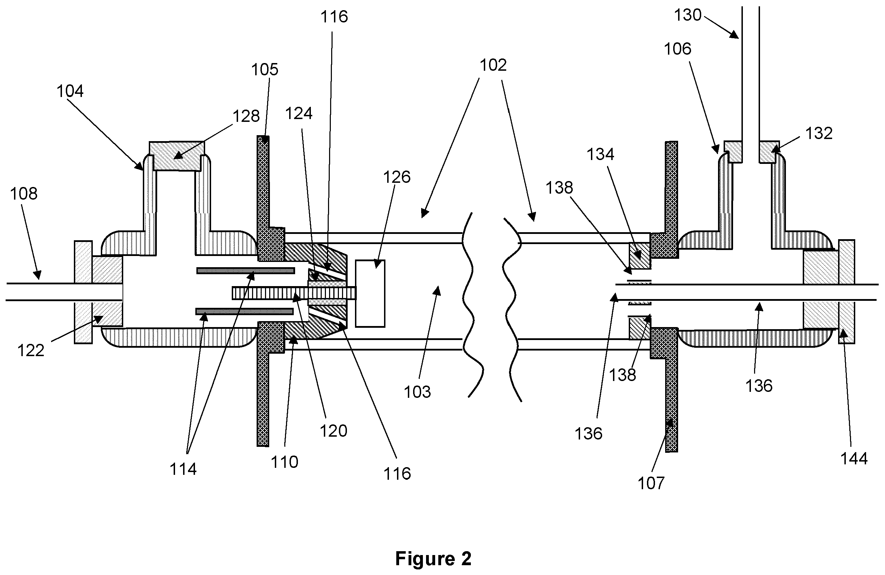

An apparatus according to a first embodiment of the invention is illustrated schematically in Figures 1 and 2.

The apparatus of Figures 1 and 2 can be used to remove solid or liquid particulate matter from a liquid stream (e.g. an aqueous stream). In other words, the apparatus can be used to separate a solid-liquid suspension or a liquid-liquid suspension.

The apparatus comprises a separating chamber (102) non-rotatably mounted between an upstream T-connector (104) and a downstream T-connector (106). Each T-connector (104, 106) has three openings - two coaxial longitudinal openings, one upstream and one downstream, (104b, 104c / 106b, 106c) and a perpendicular lateral opening (104a / 106a).

The terms "upstream" and "downstream" as used herein refer to directions relative to the flow of suspension through the apparatus, with the term "upstream" referring to a left-to-right direction in Figures 1 to 5 and the term "downstream" referring to a right-to-left direction in Figures 1 to 5 (in which suspension passes from the apparatus under pressure from left to right).

The separating chamber (102) comprises a transparent tube (103) formed from an acrylic plastics material mounted at each end thereof on upstream (110) and downstream (134) mounting blocks. The upstream (110) and downstream mounting blocks (134) are non-rotatably connected to the separator tube (103) by friction fits to form fluid-tight seals.

The use of a transparent tube (103) for the separating chamber (102) allows the user to visualise the separation of components of the suspension to be separated within the tube (103) and enables the user to gauge the effect of altering the operating conditions of the apparatus on the separation. However, it will be appreciated that the tube (103) does not need to be made from a transparent material but could instead be made from a metal material.

Each T-connector (104, 106) has a pair of coaxial longitudinally aligned end openings and a perpendicular (with respect to the longitudinal openings) lateral opening. The longitudinal and lateral openings serve as the connector inlets or outlets. Upstream support element (105) is provided between the downstream longitudinal opening of upstream T-connector (104) and the separator tube (103). Seals (not shown) are provided to ensure a fluid-tight connection between the separator tube (103) and upstream support element (105). Similarly at the downstream end of the separator tube (103), downstream support element (107) is provided between the upstream longitudinal opening of downstream T-connector (105) and the separator tube (103). Seals (not shown) are provided to ensure a fluid-tight connection between the separator tube (103) and downstream support element (107). The upstream (105) and downstream (107) support elements are connected together by three threaded rods to hold the separator tube (103) between the upstream (105) and downstream (107) support elements. The openings of the T-connectors (104, 106) are internally threaded to allow connection with other components of the apparatus, for example plugs (122, 128, 132, 144).

The upstream longitudinal opening on the upstream T-connector (104) is connected by means of its internal thread (not shown) to an externally threaded end of a plug (122) through which inlet pipe (108) passes. The inlet pipe (108) is sealingly connected via a length of tubing (108) to a pumped source of the suspension to be separated. The lateral opening on the upstream T-connector (104) therefore serves as an inlet for the suspension to be separated.

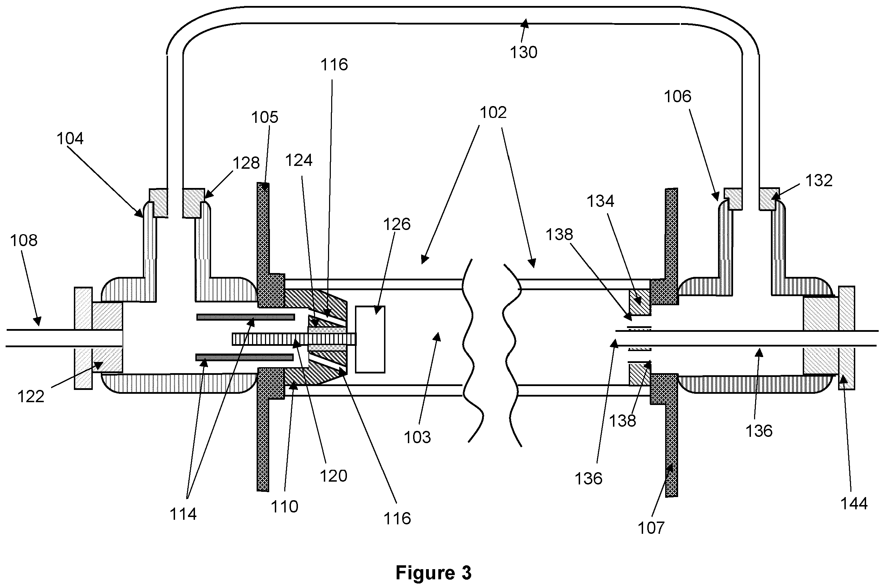

The lateral opening on the upstream T-connector (104) is connected by means of its internal thread (not shown) to an externally threaded end of a plug (128). This plug may optionally be sealingly connected via a length of tubing to exit pipe (130), as shown in Figure 3. The lateral opening on the upstream T-connector (104) therefore serves as an outlet from which at least partially separated suspension can be collected or recycled through the apparatus.

The inlet pipe (108) is connected via a length of plastic tubing to a pump (not shown) submerged within a tank containing the suspension to be separated. When the pump is turned on, the suspension is pumped from the tank to the upstream T-connector (104) of the apparatus through inlet pipe (104). The tank may also comprise a mixer for agitating the suspension to maintain the particulates in a suspended state.

The suspension to be separated enters the apparatus via the upstream T-connector (104) and passes through a series of parallel channels. Within the upstream T-connector there are a number of guide walls (114) which define the parallel channels. The guide walls (114) may be made from a metal or plastics material, which is sufficiently rigid so as not to deform as the suspension passes through the upstream T-connector. This "collimates" the suspension to be separated in order to reduce turbulence in the incoming suspension to improve the separation efficiency of the device.

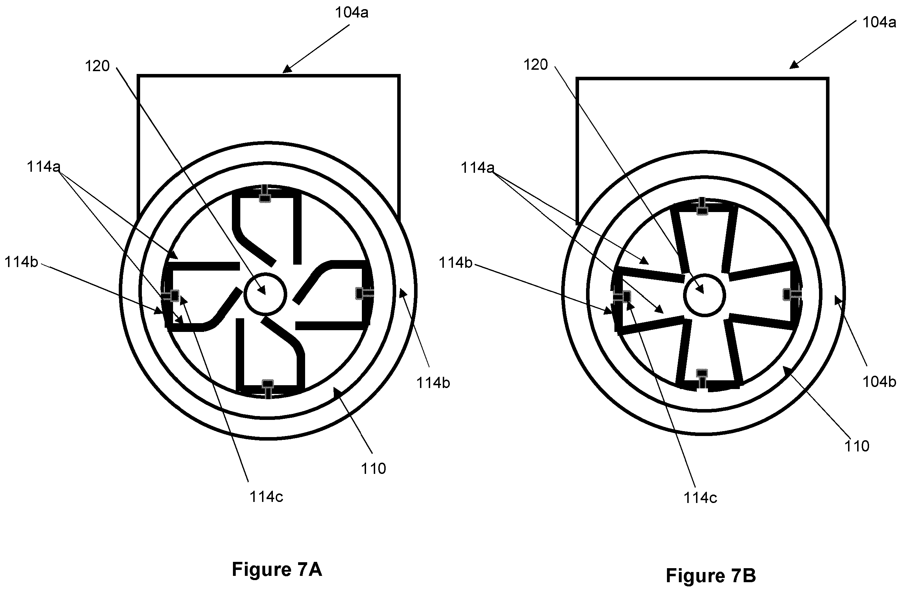

An example of the arrangement of the guide walls (114) within the upstream T-connector (104) is shown schematically in Figure 7A.

The guide walls (114) have a substantially U-shaped cross-section and have a base portion (114b) and two substantially perpendicular arms or side walls (114a) at each side of the base portion. One of the arms (114a) of each guide wall is bent to provide clearance for the rotating drive shaft (120). The two arms or side walls (114a) and the base (114b) define a channel with an open side, which faces away from the interior wall of the connector piece (110). The guide walls are attached (for example, by means of screws/rivets (114c)) to the interior wall of connector piece (110) equidistantly around its inner circumference.

An alternative arrangement of the guide walls (114) is shown in Figure 7B.

In this arrangement, the guide walls (114) have a substantially U-shaped cross-section and have a base portion (114b) and two converging arms or side walls (114a) at each side of the base portion. The two arms (114a) and the base (114b) define a channel with an open side, which faces the centre of the connector piece (110). The guide walls are attached (for example, by means of screws/rivets (114c)) to the interior wall of connector piece (110) equidistantly around its inner circumference.

In Figures 7A and 7B, screws/rivets (114c) are used to secure the guide walls to the interior of the connector piece (110). However, it will be appreciated that in practice, the screws/rivets may be countersunk into the connector piece (110) in order to further reduce the turbulence of the suspension passing through the connector piece (110). Alternatively, the guide walls can be fixed to the interior wall of the connector piece using other fastenings/adhesives.

The guide walls (114) may be arranged so as to provide a central space through which the drive shaft (120) can pass (as shown in Figures 7A and 7B).

As noted above, the guide walls (114) collimate the suspension prior to separation in order to reduce turbulence in the suspension and thereby increase separation efficiency.

At the upstream end of the separator tube (103), is the upstream mounting block (110), also referred to herein as the "nozzle block". The maximum diameter of the upstream mounting block (110) corresponds to the internal diameter of the separator tube (103), such that the upstream mounting block (110) is held within the upstream end of the separator tube (103) by a friction fit.

The upstream mounting block (110) comprises an upstream cylindrical portion with a constant diameter and a downstream tapered portion with a decreasing diameter. The upstream mounting block (110) is formed from a metallic cylinder which has been tapered at one end and into which a circular bore has been machined through part of its length in its other end leaving a downstream end wall having a circular hole therein. Secured within the circular hole is an oil seal bearing (124), through which rotating drive shaft (120) extends. The oil seal bearing (124) allows the rotating drive shaft (120) to rotate within the connector piece while preventing fluid leakage around the drive shaft.

The downstream end wall of the upstream mounting block (110) is also provided with five angled channels (116) which originate at openings on an upstream side of the wall and terminate at openings around the circumference of the upstream mounting block (110). The angled channels (116) are shaped such that fluid exits the channels at an angle of 21° with respect to the longitudinal axis of the separator unit (102). The angled channels (116) may be tapered at their ends, such that the diameter of the channel at the end where the suspension enters the separator tube (103) is smaller than the diameter along the length of the rest of the angled channels (116). As the suspension being separated exits the upstream mounting block (110) it passes through the angled channels (116) such that rotation is imparted to the suspension as it enters the separating chamber (102).

The spinner (126) has a central hub with six blades or vanes radiating outwardly from the hub, at an angle of approximately 21°. The hub also has a threaded central hole to allow the spinner (126) to be secured to the correspondingly threaded end of the drive shaft (120).

In the embodiment shown, the angled channels and the spinner vanes are oriented so as to impart a clockwise swirl to the fluid, but they could instead be oriented so as to provide an anti-clockwise swirl.

The central shaft (120) is rotatably mounted within the upstream mounting block (110) with an oil seal bearing (124) such that the spinner (126) is free to rotate within the separator tube (103). The central shaft (120) is not connected to a drive unit (e.g. a motor) for rotating the central shaft (120) and spinner (126). Instead, as suspension entering the separator unit (102) at pressure passes over the spinner (126), this rotates the spinner and therefore imparts further rotation on the suspension being separated in the separator unit (102).

At the downstream end of the transparent tube (103) of the separating chamber (102) is a downstream mounting block (134). Similarly to the upstream mounting block (110), the diameter of the downstream mounting block (134) corresponds to the internal diameter of the separator tube (103), such that the downstream block (134) is held within the upstream end of the separator tube (103) by a friction fit.

The downstream mounting block (134) is formed from a metallic cylinder which has a central circular hole that has been machined through its entire length.

A collector tube (136) is fixedly secured within the central circular hole in the downstream mounting block (134). The collector tube (136) therefore acts as an outlet ("first outlet") of the separator unit (102) for less dense components of the suspension being separated (typically purified or partially purified water). The collector tube (136) passes through the downstream T-connector (106) through a plug (144) in the downstream longitudinal opening of the downstream T-connector (106) and leads to a collector (not shown) for purified or partially purified water.

In addition, the downstream mounting block (134) has machined through its entire length one or more arc shaped openings, which together form a substantially annular opening (138). It will be appreciated that the opening cannot be entirely continuous and annular while maintaining the structure of the central circular hole in the downstream mounting block (134). The substantially annular opening (138) may therefore be interrupted by portions of the downstream mounting block (134) which are continuous with portions of the downstream mounting block (134) which define the central circular hole (for example in a "spider" arrangement).

Annular opening (138) acts as an outlet ("second outlet") to the separator unit (102) for more dense components of the suspension being separated. Components of the suspension exiting the separator unit (102) through the annular opening (138) enter the hollow body of downstream T-connector (106) and exit the downstream T-connector (106) through exit pipe (130) fixedly secured in plug (132) in the lateral opening of the downstream T-connector (106).

Liquid exiting through the exit pipe (130) can be collected in a container or can alternatively be passed back through the separator unit (102) for further separation. For example, the exit pipe (130) can deliver suspension to the tank containing the suspension to be separated to allow it to be passed through the separator unit again in the manner described above.

Alternatively, as shown in Figure 3, the exit pipe (130) may be connected to the lateral opening in the upstream T-connector (104). The partially separated suspension is then mixed with further suspension to be separated in the upstream T-connector (104) before being introduced into the separator tube (103) for further separation. Recycling the partially separated material in this way can improve the separation efficiency of the apparatus in that more liquid can be extracted from a suspension (if a purified liquid such as potable water is the desired outcome) and/or the suspension can be concentrated to give a higher concentration of particulates in the denser fraction (if concentration and isolation of particulates suspended in a liquid stream is the desired outcome).

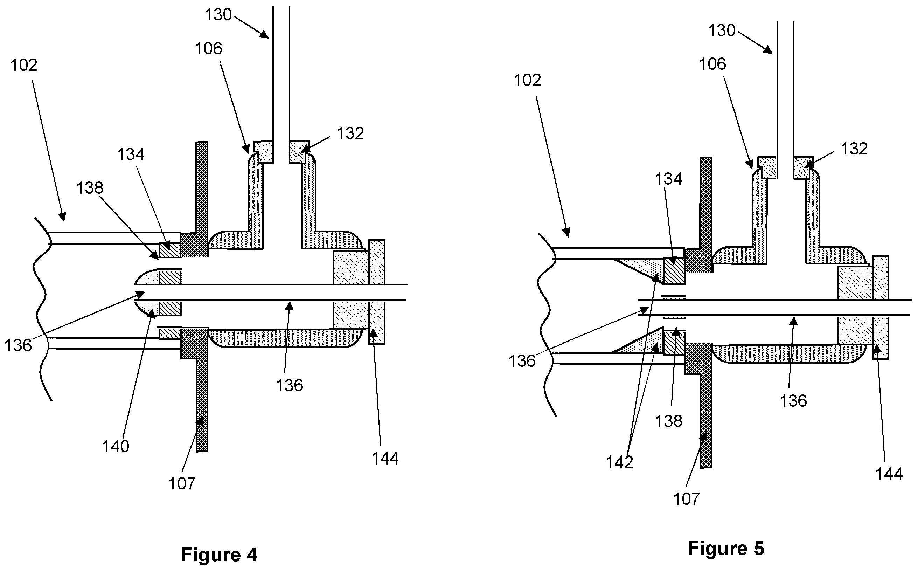

As shown in Figures 4 and 5, the downstream end of the separator unit (102) may be provided with a dome piece (140 - see Figure 4) or a conical funnel (142 - see Figure 5) for directing suspension towards the annular channel (138). The dome piece (140) is made from plastic and has a threaded hole in its centre to allow it to be screwed onto an externally threaded surface of the collector tube (136). The conical funnel (142) is also made from plastic and may be dimensioned such that it is held in place within the separator tube (103) by a friction fit.

In operation, a suspension containing components to be separated is pumped through the inlet (108) into the T-connector (104), and into the separating chamber (102) via the angled channels (116). The angled channels impart a degree of rotation to the stream of suspension entering the separating chamber (102). As the pressurised suspension passes over the spinner (126), the spinner is caused to rotate within the upstream mounting block (110). The spinning spinner imparts further rotation to the suspension stream so that the suspension forms a vortex in the separating chamber (102). Due to the centrifugal forces created by the vortex operating on the components of the suspension, as the vortexed stream passes through the separating chamber (102) the denser component(s) of the suspension are forced to the outer regions of the separating chamber, whilst less dense components follow a path closer to the longitudinal axis of the separating chamber.

As the suspension travels down the separating chamber (102), the centrifugal forces acting upon it leads to separation of the components of the suspension according to their densities.

At the downstream end of the separating chamber, the fluid containing the lighter components is collected by collector tube (136), which passes through the downstream T-connector (106) and plug (144) to a collector for collecting separated components of the suspension stream.

The heavier components of the separated/partially separated suspension pass through annular opening (138) into the hollow body of the downstream T-connector. This liquid is then passed to the upstream T-connector via exit pipe (130) for collection or further separation.

The collector tube (136) and/or exit pipe (130) may be provided with a valve (not shown) which can be opened or closed to control release of the separated suspension components from the apparatus. Alternatively, the exit pipe (1130) may be provided with a three-way valve so that components collected by the separator can be either collected or directed back to the upstream end of the separator unit for recycling through the apparatus for further separation.

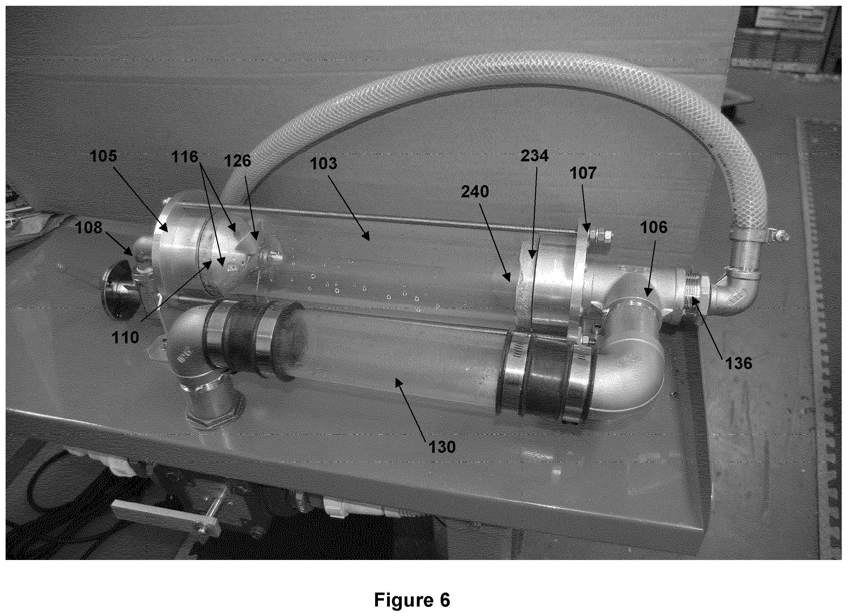

Figure 6 shows a photograph of an apparatus according to a further embodiment of the invention. Parts of this apparatus corresponding to parts of the apparatuses in Figures 1 to 5 are either labelled with the same reference numerals, or have reference numerals beginning with the numeral "2" in place of the numeral "1".

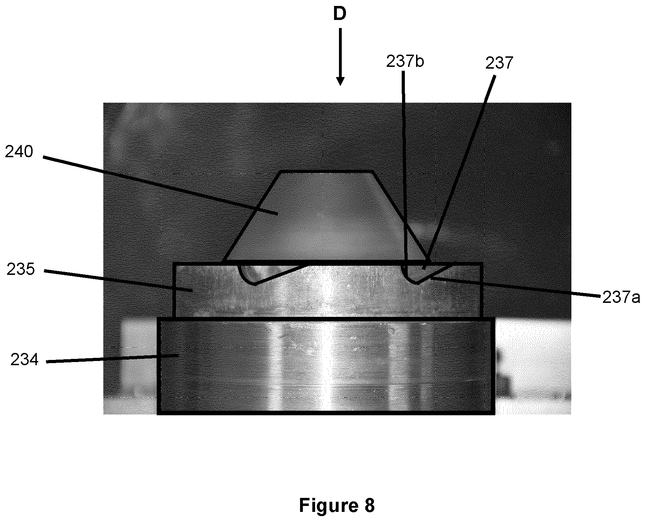

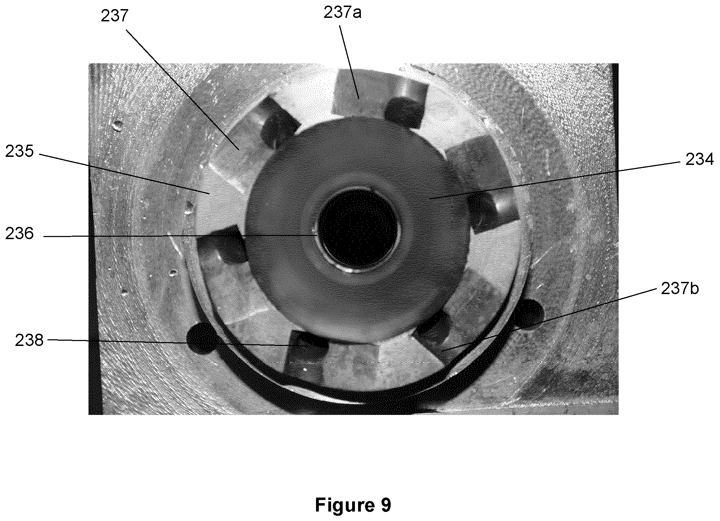

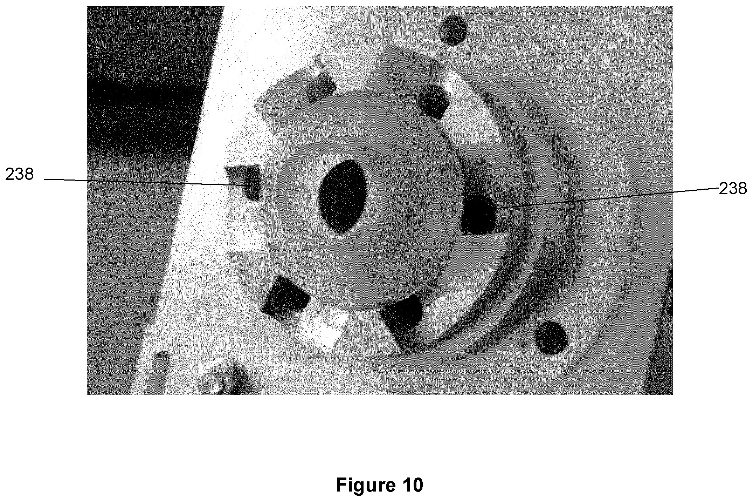

Figures 8, 9 and 10 are enlarged views of the downstream mounting block in the apparatus of Figure 6 according to a further embodiment of the invention.

As shown in Figures 8, 9 and 10, the downstream mounting block (234) comprises a cylindrical metal block which has a stepped profile, the diameter of the smaller diameter step (235) being such that it fits within the end of the separator tube (103) by a friction fit.

The mounting block (234) has a central passage of circular cross section passing through it, and a collector tube (236) (which is typically formed from a metallic material) fixedly secured in the central passage and protruding forwardly (in an upstream direction) of the mounting block. The collector tube (236) therefore acts as an outlet ("first outlet") of the separator unit (102) for less dense components of the suspension being separated (typically purified or partially purified water). The collector tube (236) passes through the downstream T-connector (106) through a plug (144) in the downstream longitudinal opening of the downstream T-connector (106) and leads to a collector (not shown) for purified or partially purified water.

A conical deflector cone (240) is fixedly secured, by means of a friction fit (optionally with the assistance of adhesive) around the protruding end of the collector tube (236). The conical deflector cone (240) in the embodiment shown is formed from a plastics material and is secured on the collector tube (236) by means of a friction fit. However, as an alternative, it could instead be formed from a metal. For example, it could be formed integrally with the mounted block (234) by machining from a single block of metal.

The mounting block (234) has a plurality (six in the embodiment shown but there could be fewer or more) of channels (238) of circular cross section passing through it and communicating with the hollow interior of the downstream T-connector (106). The channels (238) together act as an outlet ("second outlet") to the separator unit (102) for more dense components of the suspension being separated.

The upstream ends of the channels (238) open out into recesses (237) in the smaller diameter step (235). The recesses (237) each have a relatively straight inclined surface (237a) and a curved surface (237b). In the embodiment shown, the inclined surface forms an angle θ of approximately 21° with respect to the axially facing surface of the mounting block.

The orientation of the inclined surfaces (237a) is such that a vortexed fluid stream swirling in a clockwise direction is directed down the inclined surfaces (237a) and into the channels (238). If the channels in the upstream mounting block and the orientations of the spinner vanes as such as to impart an anti-clockwise twist to the fluid stream, the inclined surfaces (237a) would be oriented in the reverse direction.

The inclined surfaces (237a) assist in smoothing the flow of the fluid into the channels (238), reducing or minimising any turbulence that might otherwise be created.

The "appropriate" flow rates of suspension through the apparatus for separating a given mixture can be determined empirically by trial and error. Because the separator unit (in the illustrated embodiment) is at least partially transparent, it is possible to see denser particles accumulating at the periphery of the separating chamber and hence it is possible to judge visually when the separation is complete and hence when to collect the lighter components of the suspension before changing the conditions to collect the denser components.

The apparatuses described above can be used in combination with other separating devices which may be placed upstream or downstream of the separator unit (102). For example, the other separating devices may be or comprise filters. The filters may be provided upstream of the separator unit (102) to remove large solids from the suspension before it enters the separator unit (102). Alternatively, or additionally, filter assemblies (for example, reverse osmosis filters) can be placed downstream of the collector tube (136) to remove any contaminants not removed by the apparatuses described above.

When used for the production of potable water, the apparatuses described above may also comprise (preferably downstream) one or more UV sterilisation units for killing harmful microorganisms not removed by the vortex separator unit (102).

The apparatus described above was used to separate a variety of mixtures. All separations were carried out using a fluid flow rate through the apparatus of 350L/min.

The Total Suspended Solids were determined in accordance with the protocol set out in Method 2540D, AWWA/APHA, 20th Ed., 1999 / BS 2690: Part 120 1981;BS EN 872. The Dry Solids amounts were determined in accordance with the protocol set out in Determination of the Ash Content of Dry Matter ; ISO EN 12879, 1998.

| **Materials** | **Input Sample** | | **Output Sample** | |
|---|---|---|---|---|
| | **Total Suspended Solids** | **Dry Solids** | **Total Suspended Solids** | **Dry Solids** |
| River water suspension* | 556ppm | n/a | 2ppm | n/a |
| River water suspension* | 1250ppm | 0.06% | 82.9ppm | 0.0335% |
| 250g of 180µm sand in 25L water | 481 ppm | 0.0631% | 29ppm | 0.000998% |
| 250g of Kaolinite^{#} in 25L water | 2450 ppm | 0.28% | 1390ppm | 0.0992% |

| | | | | |
|---|---|---|---|---|
| * River water was obtained from the River Kelvin, Glasgow. A suspension was formed by taking 25L of river water and mixing this with 250g of solid material collected from the river bed. # Kaolinite obtained from Sigma Aldrich (Product No. 03584; Molecular Weight: 258.16, Density: 2.6 gm/cc, Particle size distribution: 99.9% passing 45 microns, mean particle size 2.1 microns) | | | | |

The embodiments described above and illustrated in the accompanying figures are merely illustrative of the invention and are not intended to have any limiting effect. It will readily be apparent that numerous modifications and alterations may be made to the specific embodiments shown without departing from the principles underlying the invention. All such modifications and alterations are intended to be embraced by this application.

## Claims

1. An apparatus for removing solids from a liquid stream, the apparatus comprising:
a separating chamber (102) having a liquid inlet (108) at an upstream end thereof, a central first outlet (136) at a downstream end of the chamber and a second outlet (138) disposed radially outwardly of the central first outlet (136);
the liquid inlet (108) being in communication with a source of pressurised liquid and comprising at least one angled channel (116) passing through a nozzle block (110) and opening out into the separating chamber (102);
a spinner (126) rotatably mounted inside the separating chamber (102) and having a plurality of vanes; the denser components of the liquid stream being directed out of the chamber through the second outlet (138) and lighter components of the liquid stream being directed out of the chamber through the central first outlet (136);
**characterised in that** the separating chamber (102) and spinner (126) are arranged such that, in use, pressurised liquid passing through the angled channels (116) of the liquid inlet is incident upon the vanes of the spinner (126) so as to rotate the spinner (126) and thereby swirl liquid entering the separating chamber to form a vortex, the pressurised liquid being the sole means of rotating the spinner (126), the vortex bringing about centrifugal separation of components of the liquid as it passes from the upstream end of the chamber (102) to the downstream end of the chamber,

2. An apparatus according to claim 1 wherein the number of vanes present on the spinner (126) is from three to eight.

3. An apparatus according to claim 1 or claim 2 wherein the vanes are angled at an angle of from 15° to 50°.

4. An apparatus according to any one of claims 1 to 3 wherein the angles of the vanes increase from the root (inner region of the vane) to the outer edge of the vane.

5. An apparatus according to any one of claims 1 to 4 comprising between three and eight angled channels (116).

6. An apparatus according to any one of claims 1 to 5 wherein the angles of the angled channels (116) are in a range from about 20° to about 45 ° relative to a central axis of the separating chamber (102).

7. An apparatus according to any one of claims 1 to 6 wherein the angled channels (116) are oriented to direct liquid onto the vanes in a tangential direction relative to the vanes.

8. An apparatus according to any one of claims 1 to 7 wherein the number of angled channels (116) differs from the number of vanes.

9. An apparatus according to claim 8 wherein the number of angled channels (116) differs from the number of vanes by an odd number.

10. An apparatus according to any one of claims 1 to 9 wherein the second outlet (138) is of annular shape and surrounds the central first outlet (136).

11. An apparatus according to any one of claims 1 to 10 wherein the central first outlet (136) comprises a pipe extending into the separating chamber (102).

12. An apparatus according to any one of claims 1 to 11 wherein the first outlet (136) has a divergent (in a downstream direction) radially outer surface so that liquid containing denser components is deflected outwardly and away from the first outlet (136).

13. An apparatus according to any one of claims 1 to 12 further comprising a pump for supplying the liquid under pressure to the apparatus.

14. A method of removing particulate materials from a liquid such as water, which method comprises pressurising the liquid and directing it through an apparatus according to any one of claims 1 to 13.

15. A method of removing particulate materials from a liquid such as water, which method comprises pumping the liquid through an apparatus according to any one of claims 1 to 13.

## Patentansprüche

1. Vorrichtung zum Entfernen von Feststoffen aus einem Flüssigkeitsstrom, wobei die Vorrichtung Folgendes umfasst:
eine Trennkammer (102) mit einem Flüssigkeitseinlass (108) an einem stromaufwärtigen Ende davon, einem zentralen ersten Auslass (136) an einem stromabwärtigen Ende der Kammer und einem zweiten Auslass (138), der radial nach außen von dem zentralen ersten Auslass (136) angeordnet ist;
wobei der Flüssigkeitseinlass (108) mit einer Quelle druckbeaufschlagter Flüssigkeit in Kommunikation steht und mindestens einen abgewinkelten Kanal (116) umfasst, der durch einen Düsenblock (110) verläuft und in die Trennkammer (102) mündet;
einen Spinner (126), der drehbar innerhalb der Trennkammer (102) montiert ist und eine Vielzahl von Schaufeln aufweist; wobei die dichteren Komponenten des Flüssigkeitsstroms durch den zweiten Auslass (138) aus der Kammer herausgeleitet werden und leichtere Komponenten des Flüssigkeitsstroms durch den zentralen ersten Auslass (136) aus der Kammer herausgeleitet werden;
**dadurch gekennzeichnet, dass** die Trennkammer (102) und der Spinner (126) derart angeordnet sind, dass in Verwendung druckbeaufschlagte Flüssigkeit, die durch die abgewinkelten Kanäle (116) des Flüssigkeitseinlasses verläuft, auf die Schaufeln des Spinners (126) auftrifft, um den Spinner (126) zu drehen und dadurch in die Trennkammer eintretende Flüssigkeit zu verdrallen, um einen Wirbel zu bilden, wobei die druckbeaufschlagte Flüssigkeit das einzige Mittel zum Drehen des Spinners (126) ist, wobei der Wirbel eine zentrifugale Trennung von Komponenten der Flüssigkeit hervorruft, wenn sie von dem stromaufwärtigen Ende der Kammer (102) zu dem stromabwärtigen Ende der Kammer verläuft.

2. Vorrichtung nach Anspruch 1, wobei die Anzahl von Schaufeln, die an dem Spinner (126) vorhanden ist, drei bis acht beträgt.

3. Vorrichtung nach Anspruch 1 oder Anspruch 2, wobei die Schaufeln in einem Winkel von 15° bis 50° abgewinkelt sind.

4. Vorrichtung nach einem der Ansprüche 1 bis 3, wobei die Winkel der Schaufeln von dem Fuß (innere Region der Schaufel) zu der Außenkante der Schaufel zunehmen.

5. Vorrichtung nach einem der Ansprüche 1 bis 4, umfassend zwischen drei und acht abgewinkelte Kanäle (116).

6. Vorrichtung nach einem der Ansprüche 1 bis 5, wobei die Winkel der abgewinkelten Kanäle (116) in einem Bereich von etwa 20° bis etwa 45° relativ zu einer Mittelachse der Trennkammer (102) liegen.

7. Vorrichtung nach einem der Ansprüche 1 bis 6, wobei die abgewinkelten Kanäle (116) so ausgerichtet sind, dass sie Flüssigkeit in einer tangentialen Richtung relativ zu den Schaufeln auf die Schaufeln leiten.

8. Vorrichtung nach einem der Ansprüche 1 bis 7, wobei sich die Anzahl von abgewinkelten Kanälen (116) von der Anzahl von Schaufeln unterscheidet.

9. Vorrichtung nach Anspruch 8, wobei sich die Anzahl von abgewinkelten Kanälen (116) um eine ungerade Zahl von der Anzahl von Schaufeln unterscheidet.

10. Vorrichtung nach einem der Ansprüche 1 bis 9, wobei der zweite Auslass (138) ringförmig ist und den zentralen ersten Auslass (136) umgibt.

11. Vorrichtung nach einem der Ansprüche 1 bis 10, wobei der zentrale erste Auslass (136) ein Rohr umfasst, das sich in die Trennkammer (102) erstreckt.

12. Vorrichtung nach einem der Ansprüche 1 bis 11, wobei der erste Auslass (136) eine divergierende (in einer stromabwärtigen Richtung) radial äußere Oberfläche aufweist, sodass Flüssigkeit, die dichtere Komponenten enthält, nach außen und weg von dem ersten Auslass (136) abgelenkt wird.

13. Vorrichtung nach einem der Ansprüche 1 bis 12, ferner umfassend eine Pumpe zum Zuführen der Flüssigkeit unter Druck zu der Vorrichtung.

14. Verfahren zum Entfernen von teilchenförmigen Materialien aus einer Flüssigkeit wie Wasser, wobei das Verfahren Druckbeaufschlagen der Flüssigkeit und Leiten derselben durch eine Vorrichtung nach einem der Ansprüche 1 bis 13 umfasst.

15. Verfahren zum Entfernen von teilchenförmigen Materialien aus einer Flüssigkeit wie Wasser, wobei das Verfahren Pumpen der Flüssigkeit durch eine Vorrichtung nach einem der Ansprüche 1 bis 13 umfasst.

## Revendications

1. Appareil pour éliminer des solides d'un flux de liquide, l'appareil comprenant :
une chambre de séparation (102) présentant une entrée de liquide (108) à une extrémité amont de celle-ci, une première sortie centrale (136) à une extrémité aval de la chambre et une seconde sortie (138) disposée radialement à l'extérieur de la première sortie centrale (136) ;
l'entrée de liquide (108) étant en communication avec une source de liquide sous pression et comprenant au moins un canal incliné (116) traversant un bloc de buse (110) et débouchant dans la chambre de séparation (102) ;
une centrifugeuse (126) montée de manière rotative à l'intérieur de la chambre de séparation (102) et présentant une pluralité d'aubes ; les composants plus denses du flux de liquide étant dirigés hors de la chambre à travers la seconde sortie (138) et les composants plus légers du flux de liquide étant dirigés hors de la chambre à travers la première sortie centrale (136) ;
**caractérisé en ce que** la chambre de séparation (102) et la centrifugeuse (126) sont agencées de sorte que, lors de l'utilisation, du liquide sous pression traversant les canaux inclinés (116) de l'entrée de liquide est incident sur les aubes de la centrifugeuse (126) de façon à faire tourner la centrifugeuse (126) et à faire ainsi faire tourbillonner du liquide entrant dans la chambre de séparation pour former un tourbillon, le liquide sous pression étant le seul moyen de faire tourner la centrifugeuse (126), le tourbillon provoquant une séparation centrifuge des composants du liquide lors de son passage de l'extrémité amont de la chambre (102) à l'extrémité aval de la chambre.

2. Appareil selon la revendication 1, dans lequel le nombre d'aubes présentes sur la centrifugeuse (126) est compris entre trois et huit.

3. Appareil selon la revendication 1 ou la revendication 2, dans lequel les aubes sont inclinées selon un angle allant de 15° à 50°.

4. Appareil selon l'une quelconque des revendications 1 à 3, dans lequel les angles des aubes augmentent à partir de l'emplanture (région intérieure de l'aube) jusqu' au bord extérieur de l'aube.

5. Appareil selon l'une quelconque des revendications 1 à 4, comprenant entre trois et huit canaux inclinés (116).

6. Appareil selon l'une quelconque des revendications 1 à 5, dans lequel les angles des canaux inclinés (116) sont compris dans une plage allant d'environ 20° à environ 45° par rapport à un axe central de la chambre de séparation (102).

7. Appareil selon l'une quelconque des revendications 1 à 6, dans lequel les canaux inclinés (116) sont orientés pour diriger du liquide sur les aubes dans une direction tangentielle par rapport aux aubes.

8. Appareil selon l'une quelconque des revendications 1 à 7, dans lequel le nombre de canaux inclinés (116) diffère du nombre d'aubes.

9. Appareil selon la revendication 8, dans lequel le nombre de canaux inclinés (116) diffère du nombre d'aubes par un nombre impair.

10. Appareil selon l'une quelconque des revendications 1 à 9, dans lequel la seconde sortie (138) est de forme annulaire et entoure la première sortie centrale (136).

11. Appareil selon l'une quelconque des revendications 1 à 10, dans lequel la première sortie centrale (136) comprend un tuyau s'étendant dans la chambre de séparation (102).

12. Appareil selon l'une quelconque des revendications 1 à 11, dans lequel la première sortie (136) présente une surface radialement extérieure divergente (dans une direction aval) de sorte que du liquide contenant des composants plus denses est dévié vers l'extérieur et à l'écart de la première sortie (136).

13. Appareil selon l'une quelconque des revendications 1 à 12, comprenant en outre une pompe pour fournir le liquide sous pression à l'appareil.

14. Procédé d'élimination de matières particulaires d'un liquide tel que l'eau, lequel procédé comprend la mise sous pression du liquide et le fait de le diriger à travers un appareil selon l'une quelconque des revendications 1 à 13.

15. Procédé d'élimination de matières particulaires d'un liquide tel que l'eau, lequel procédé comprend le pompage du liquide à travers un appareil selon l'une quelconque des revendications 1 à 13.
